# EUROPEAN PATENT SPECIFICATION

(11) **EP 2 907 305 B1**
(45) Date of publication and mention of the grant of the patent: **17.08.2016**
(21) Application number: 13774158.3
(22) Date of filing: 08.10.2013
(51) Int. Cl.: H04N 13/00

(54) **DEPTH ADJUSTMENT OF AN IMAGE OVERLAY IN A 3D IMAGE**
TIEFENEINSTELLUNG EINER BILDÜBERLAGERUNG IN EINEM 3D BILD
ADJUSTEMENT EN PROFONDEUR D'UNE IMAGE INCRUSTÉE DANS UNE IMAGE 3D

(30) Priority: 11.10.2012 NL 2009616
(43) Date of publication of application: 19.08.2015
(73) Proprietor: Ultra-D Coöperatief U.A., 5657 HJ Eindhoven (NL)
(72) Inventor: ROELEN, Waltherus Antonius Hendrikus, NL-5721 MA Asten (NL); BARENBRUG, Bart Gerard Bernard, NL-5583 CG Waalre (NL)
(74) Representative: DeltaPatents B.V.
(86) International application number: PCT/EP2013/070926
(87) International publication number: WO 2014/056899

(56) References cited:
- EP-A2- 2 451 176
- US-A1- 2011 316 991
- US-A1- 2012 162 199

## Description

### FIELD OF THE INVENTION

The invention relates to a system and method for processing a three-dimensional [3D] image signal, the 3D image signal comprising a two-dimensional [2D] image signal and a 2D auxiliary signal, the 2D auxiliary signal enabling 3D rendering of the 2D image signal on a 3D display. The invention further relates to a 3D display device comprising the system.

### BACKGROUND ART

Increasingly, display devices such as televisions, digital photo frames, tablets and smartphones comprise 3D displays to provide a user with a perception of depth when viewing content on such a device. For that purpose, such 3D display devices may, either by themselves or together with glasses worn by the user, provide the user with different images in each eye so as to provide the user with a perception of depth based on stereoscopy, i.e., a stereoscopic perception of depth.

3D display devices typically use content which contains depth information in order to establish the content on screen as having a degree of depth. The depth information may be provided implicitly in the content. For example, in the case of so-termed stereo content, the depth information is provided by the differences between a left and a right image signal of the stereo content. Together, the left and right image signal thus constitute a stereo 3D image signal. The depth information may also be provided explicitly in the content. For example, in content encoded in the so-termed image+depth format, the depth information is provided by a 2D depth signal comprising depth values which are indicative of distances that objects within the 2D image signal have towards a camera or viewer. Instead of depth values, also disparity values may be used, i.e., the 2D depth signal may be a 2D disparity signal, or in general, a 2D depth-related signal. The 2D image signal and the 2D depth-related signal together constitute an alternative to the stereo 3D image signal.

Essentially, a 3D image signal thus comprises of at least one 2D image signal and one 2D auxiliary signal, the latter being, e.g., a 2D depth-related signal, or a further 2D image signal which together with the 2D image signal constitutes a stereo 3D image signal.

With respect to the 3D displays themselves: so-termed autostereoscopic displays provide said stereoscopic perception of depth without needing the viewer to wear polarized or shutter-based glasses. For that purpose, optical components are used, such as lenticular lens arrays (or in general lenticular or barrier means), which enable the display to emit a viewing cone from each given point on the 3D display, the viewing cone comprising at least a left view and a right view of a scene. This enables the viewer to see a different image with each eye when positioned accordingly within the viewing cone. Certain autostereoscopic displays, sometimes referred to as automultiscopic displays, provide multiple views of the same scene, rather than only a left and a right view. This allows the viewer to assume multiple positions in the viewing cone, i.e., move left-right in front of the display, while still obtaining a stereoscopic perception of the scene.

Examples of such autostereoscopic displays are described in a paper by C. van Berkel et al entitled "Multiview 3D - LCD" published in SPIE Proceedings Vol. 2653, 1996, pages 32 to 39 and in GB-A-2196166. In these examples the autostereoscopic display comprises a matrix LC (liquid crystal) display panel which has rows and columns of pixels (display elements) and which acts as a spatial light modulator to modulate light from a light source. The display panel can be of the kind used in other display applications, for example computer display screens for presenting display information in two dimensional form. A lenticular sheet, for example in the form of a molded or machined sheet of polymer material, overlies the output side of the display panel with its lenticular elements, comprising (semi) cylindrical lens elements, extending in the column direction with each lenticular element being associated with a respective group of two, or more, adjacent columns of display elements and extending in a plane that runs parallel with the display element columns. In an arrangement in which each lenticule is associated with two columns of display elements, the display panel is driven to display a composite image comprising two 2D sub-images vertically interleaved, with alternate columns of display elements displaying the two images, and the display elements in each column providing a vertical slice of the respective 2D (sub) image. The lenticular sheet directs these two slices, and corresponding slices from the display element columns associated with the other lenticules, to the left and right eyes respectively of a viewer in front of the sheet so that, with the sub-images having appropriate binocular disparity, the viewer perceives a single stereoscopic image. In other, multi-view, arrangements, in which each lenticule is associated with a group of more than two adjacent display elements in the row direction and corresponding columns of display elements in each group are arranged appropriately to provide a vertical slice from a respective 2-D (sub-) image, then as a viewer's head moves a series of successive, different, stereoscopic views are perceived for creating, for example, a look-around impression.

Autostereoscopic displays of above kind may be used for various applications, for example in home or portable entertainment, medical imaging and computer-aided design (CAD).

It is noted that US 2011/0316991 A1 describes a stereoscopic display device including: a parallax adjustment section performing a parallax adjustment on each of a left-eye image and a right eye image which are inputted; and a display section displaying the left-eye image and the right-eye image which are resultant of the parallax adjustment by the parallax adjustment section. The parallax adjustment section performs the parallax adjustment only on a region other than an OSD image region with an OSD image superposed therein in each of the left-eye image and the right-eye image. US 2011/0316991 A1 thus excludes the OSD image from parallax control. However, US 2011/0316991 does not disclose enabling a user to establish a user-defined 2D region so as to establish a depth reduction in a display region on the 3D display. Rather, US 2011/0316991 selects a fixed region, namely that of the OSD image, from which parallax control is to be applied. In fact, in US2011/03116991, the OSD image is explicitly available to the system. Accordingly, US 2011/0316991 does not offer a solution for dealing with hardcoded overlays in a 3D image signal.

EP 2451176 A2 describes video communication method of a 3D video communication, which is said to include acquiring a plurality of 2D images corresponding to a talker using a 3D camera, adjusting a point of convergence of the plurality of 2D images using a preset feature point of the talker, detecting an object located between the talker and the 3D camera using the acquired plurality of 2D images, scaling an original sense of depth of the detected object to a new sense of depth, and generating a 3D talker image including the object with the new sense of depth and transmitting the 3D talker image to a 3D video communication apparatus of a listener. EP 2451176 A2, however, does not disclose enabling a user to establish a user-defined 2D region so as to establish a depth reduction in a display region on the 3D display. Rather, in EP 2451176, the object is detected automatically using an object detecting unit 135 [0077].In fact, EP 2451 176 makes use of the depth of the object to detect the object, i.e., the object is effectively located in 3D [0077-0082], and thereby relies on the distance having been correctly obtained by the 3D camera. It will be appreciated that this does not provide a solution for dealing with hardcoded overlays in a 3D image signal to which a depth estimator may have assigned an erroneous depth.

US 2012/0162199 A1 describes an apparatus and a method for displaying a 3D augmented reality. It is said that if the augmented reality is implemented as a 3D image, some of the 3D augmented information may be degraded in terms of information delivery efficiency. It is further said that the 3D effects may be selectively removed from a selected object of a 3D augmented reality image by providing an object area detecting unit to detect a first object area of a left image frame of a 3D image and a second object area of a right image frame of the 3D image based on a selected object of the 3D image, and a frame adjusting unit to adjust the left image frame and the right image frame to change a 3D effect of the selected object. However, in US 2012/0162199, the objects are known per se, i.e., defined by object information [see 0036, 0048], thereby enabling the apparatus to know which object is selected by the user, or even enabling the object to be automatically selected [see 0059].Accordingly, instead of enabling a user to establish a user-defined 2D region so as to establish a depth reduction in a display region on the 3D display, US 2012/0162199 enables the user to directly select an object via the object information. US 2012/0162199 thus addresses the problem of how to remove a three-dimensional effect of an object defined by object information, and does not offer a solution when dealing with hardcoded overlays in a 3D image signal, i.e., for which such object information is not available.

### SUMMARY OF THE INVENTION

The inventors have recognized that when viewing content of a 3D image signal on a 3D display, any high-detail features in the content are best displayed at a display depth which not too far from the display plane, i.e., at a relatively neutral display depth. A reason for this is that crosstalk such as optical crosstalk may occur between the stereoscopic sub-images perceived by the user. Such crosstalk typically leads to so-termed ghosting. Ghosting in general is distracting for a viewer. Ghosting in high-detailed features in the content is especially distracting for the viewer. By displaying the high-detailed features at a relatively neutral display depth, such ghosting is reduced.

Examples of such high-detailed features are subtitles, broadcaster logos, or graphical user interface (GUI) elements, or in general anything involving small text which needs to displayed to the user in a readable form. In general, such high-detailed features are henceforth referred to as overlays due to the subtitles, logos, etc, typically being overlaid over another type of content.

When such overlays are delivered separately from the 2D image signal, e.g., as separate layers or streams within or next to the 3D image signal, the overlays may be displayed at a depth which not too far from the display plane by assigning corresponding depth values to the overlays. Nevertheless, constraints have to be taken into account such that, e.g., subtitles are assigned a depth which places them in front of the content, i.e., nearer to the viewer, than the content underlying and surrounding the subtitles. The inventors have recognized that such depth assignment is much more difficult when the overlays have already been composited into the content, i.e., being hardcoded in the 3D image signal. Although it is possible to detect an overlay, e.g., using an overlay detection (also known as overlay segmentation) as known per se from the field of image analysis, such overlay detection is frequently imperfect. Hence, a detected overlay may not perfectly match the actual overlay in the 3D image signal. In particular, (sub)pixel-accurate overlay detection is difficult.

In principle, it is possible to already assign a relatively neutral display depth to overlays when generating the 3D image signal. For that purpose, a 2D-to-3D conversion may be used which inherently or by design attempts to assign said neutral display depth to the overlays. However, the inventors have recognized that depth estimation for small text like subtitles is difficult since they comprise separate thin structures. Consequently, it is difficult for a depth estimator to assign the same depth to such separate parts of the overlay. This can cause fluctuations (spatially and temporally) of the depth assigned to such overlays. These can be very distracting for a viewer.

It would be advantageous to provide a system and method which addresses the above concerns.

The invention provides a system, a 3D display device, a method and a computer program product as defined in the appended claims.

The above measures provide a user interface subsystem for enabling a user to define a user-defined 2D region in the 2D image signal. For example, the user may define the user-defined 2D region using a graphical user interface (GUI) to define a top side, bottom side, left side, and right side of a rectangular user-defined 2D region, or select the user-defined 2D region amongst a plurality of pre-determined 2D regions, etc. Based on the user-defined 2D region, a 2D region in the 2D auxiliary signal is defined. The 2D region corresponds to a display region on a display plane of the 3D display when 3D rendering the 2D image signal using the 2D auxiliary signal. A depth reduction parameter is obtained for the display region, with the depth reduction parameter representing a desired amount of depth reduction in the display region. Here, the term depth reduction refers to a reduction towards a neutral display depth when 3D rendering the 2D image signal on the 3D display. To enable the depth reduction to be established, an adjustment value is derived from the depth reduction parameter. Accordingly, the depth reduction in the display region can be established, namely by adjusting signal values of the 2D auxiliary signal within the 2D region based on the adjustment value.

The above measures have the effect that a 2D region is defined and an adjustment value is provided, which together enable establishing the depth reduction in the display region by adjusting signal values of the 2D auxiliary signal within the 2D region based on the adjustment value. This has the advantageous effect that when the 3D image signal comprises hard-coded overlays, the user is enabled to define the user-defined 2D region to include the hard-coded overlays, thereby causing the system to provide an adjustment value for a corresponding 2D region in the auxiliary signal, with the adjustment value enabling the depth of the hard-coded overlays in the display region to be reduced towards a neutral display depth. Accordingly, in case a depth estimator has assigned an erroneous depth to the hard-coded overlay, the erroneous depth can be reduced, thereby also reducing depth fluctuations typically associated with such an erroneous depth. Advantageously, it is not needed to rely on an (automatic) overlay detection which is frequently imperfect for the earlier mentioned reasons. Rather, the user is enabled to define the user-defined 2D region him/herself, i.e., manually.

The following describes optional aspects of the present invention.

Optionally, the region definer comprises an overlay detector for detecting an overlay in the 3D image signal, and the user interface subsystem is arranged for enabling the user to establish the user-defined 2D region based on the detected overlay. Although it has been recognized that an overlay detector may fail at perfectly detecting hardcoded overlays in a 3D image signal, a detected overlay may nevertheless be used as a basis for the user in defining the user-defined 2D region. For example, the detected overlay may guide the user towards the location of the hardcoded overlay, thereby enabling the user to quickly and conveniently define the user-defined 2D region. Another example is that, at times, the detected overlay may be sufficiently well detected, thereby enabling the user to define the user-defined 2D region directly based on the detected overlay.

Optionally, the user interface subsystem is arranged for using the detected overlay to:
- initialize the user-defined 2D region; and/or
- establish a grid for providing the user with snap-to-grid functionality when establishing the user-defined 2D region.

Optionally, the user interface subsystem is arranged for enabling the user to specify the desired amount of depth reduction in the display region, thereby establishing the depth reduction parameter.

Optionally, the signal input is arranged for obtaining metadata indicative of a pre-defined 2D region, and the region definer is arranged for defining the 2D region based on the pre-defined 2D region.

Optionally, the depth processor is arranged for deriving an offset value from the depth reduction parameter to enable adjusting the signal values of the 2D auxiliary signal within the 2D region by applying said offset value to the signal values.

Optionally, the 2D auxiliary signal is a 2D depth-related signal, and the depth processor is arranged for deriving a gain value from the depth reduction parameter to enable adjusting the signal values of the 2D depth-related signal within the 2D region by applying the gain value to the signal values.

Optionally, the depth processor is arranged for adjusting the signal values of the 2D auxiliary signal within the 2D region based on the adjustment value so as to establish the depth reduction in the display region.

Optionally, the depth processor is arranged for adjusting the signal values of the 2D auxiliary signal within the 2D region based alpha-blending the signal values with a neutral depth value.

Optionally, the depth processor is arranged for establishing a gradual transition between the adjusted signal values within the 2D region and non-adjusted signal values outside the 2D region.

Optionally, the gradual transition is a substantially first-order linear transition or second-order non-linear transition.

Optionally, the system further comprises an image processor for:
- establishing a 2D image region in the 2D image signal which corresponds to the 2D region in the 2D auxiliary signal; and
- applying an image enhancement technique to image values of the 2D image signal within the 2D image region.

Optionally, the image enhancement technique is at least one of the group of: a contrast enhancement, a sharpness adjustment, and a temporal filtering.

### BRIEF DESCRIPTION OF THE DRAWINGS

These and other aspects of the invention are apparent from and will be elucidated with reference to the embodiments described hereinafter. In the drawings,
Fig. 1 shows a system for processing a 3D image signal;
Fig. 2 shows a method for processing a 3D image signal;
Fig. 3 shows a computer program product for performing the method;
Fig. 4a shows a 2D image signal comprising subtitles;
Fig. 4b shows a 2D depth signal corresponding to the 2D image signal;
Fig. 5a shows a GUI for enabling a user to establish a user-defined 2D region;
Fig. 5b shows the 2D depth signal reflecting the GUI;
Fig. 6a shows the user establishing the user-defined 2D region using the GUI;
Fig. 6b shows the region definer establishing the user-defined 2D region as the 2D region, and the depth processor establishing the depth reduction in the display region;
Fig. 7a shows a close-up view of the 2D depth signal without depth reduction;
Fig. 7b shows a close-up view of the 2D depth signal with depth reduction;
Fig. 7c illustrates the display region and a transition region; and
Fig. 8 shows a gain value varying as a function of vertical position on screen.

It should be noted that items which have the same reference numbers in different Figures, have the same structural features and the same functions, or are the same signals. Where the function and/or structure of such an item has been explained, there is no necessity for repeated explanation thereof in the detailed description.

### DESCRIPTION OF THE INVENTION

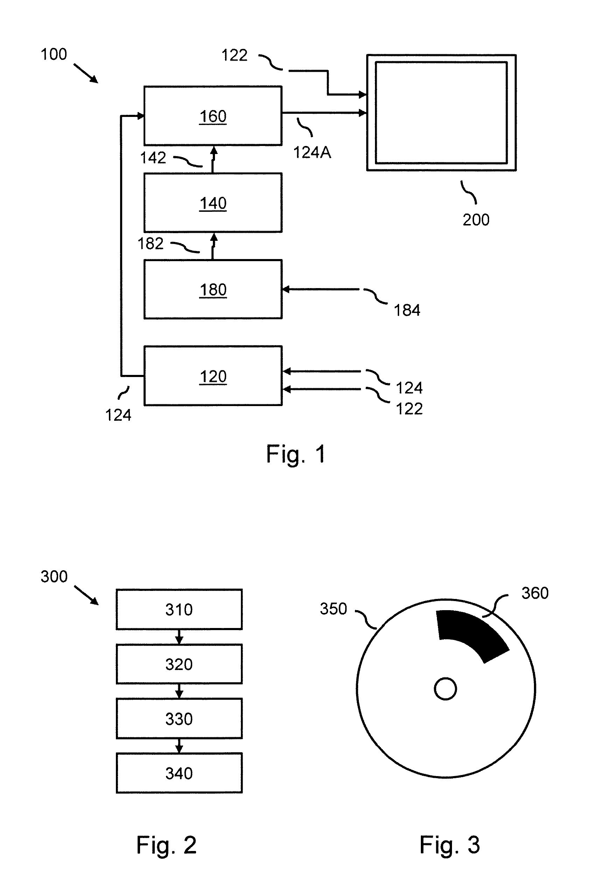

Fig. 1 shows a system 100 for processing a three-dimensional [3D] image signal, the 3D image signal comprising a two-dimensional [2D] image signal and a 2D auxiliary signal, the 2D auxiliary signal enabling 3D rendering of the 2D image signal on a 3D display 200. The 2D auxiliary signal may be, e.g., a 2D disparity signal, a 2D depth signal or another 2D image signal. When combining the 2D auxiliary signal with the 2D image signal, a 3D rendering of the 2D image signal is made possible on a 3D display. The 3D rendering may involve performing view rendering, e.g., to generate another 2D image signal from the 2D image signal and a 2D depth-related signal. The 3D rendering may also involve processing two 2D image signals for enabling stereoscopic viewing.

The system 100 comprises a signal input 120 for obtaining the 2D image signal 122 and the 2D auxiliary signal 122. The system 100 further comprises a region definer 140 for defining a 2D region 142 in the 2D auxiliary signal, the 2D region corresponding to a display region on a display plane of the 3D display when 3D rendering the 2D image signal. The 2D region thus has a shape and a position. The 2D region may be constituted by region parameters describing an outline of the 2D region. The region parameters may be position parameters. The 2D region corresponds to a display region on a display plane of the 3D display when 3D rendering the 2D image signal. In other words, in a display region on the display plane of the 3D display, the depth as perceived by the user is established by the signal values of the 2D auxiliary signal within the 2D region. The display region is a region on the display plane in that it extends in width and in height on the display plane. The term display plane refers to the plane coinciding with the main light emitting surface of the 3D display and having a substantially same depth, i.e., corresponding to that of the main light emitting surface.

The system 100 further comprises a depth processor 160 for obtaining a depth reduction parameter 162, the depth reduction parameter representing a desired amount of depth reduction in the display region when 3D rendering the 2D image signal. The depth reduction parameter may be obtained internally, e.g., by being established by another part of the system or by being pre-set. The depth reduction parameter may also be obtained externally, e.g., from a user, as will be discussed further onward. The depth reduction parameter represents a desired amount of depth reduction in the display region when 3D rendering the 2D image signal. Here, the adjective *desired* refers to the depth reduction parameter having established in order to effect said depth reduction. The term depth reduction refers to depth within the display region being nearer to a neutral display depth, i.e., resulting in the content being established less protruding from, or caving into the 3D display.

The depth processor 160 is arranged for deriving an adjustment value from the depth reduction parameter for enabling establishing the depth reduction in the display region by adjusting signal values of the 2D auxiliary signal within the 2D region based on the adjustment value. Thus, the adjustment parameter is arranged for, when adjusting signal values of the 2D auxiliary signal within the 2D region based on the adjustment value, establishing the depth reduction in the display region. Consequently, the depth reduction is effected after said adjusting of the signal values.

It is noted that the depth processor 160 may be arranged for actually adjusting the signal values of the 2D auxiliary signal within the 2D region based on the adjustment value. This is in fact shown in Fig. 1, where the depth processor 160 obtains the 2D auxiliary signal 124 from the input 120 and establishes an adjusted 2D auxiliary signal 124A. The adjusted 2D auxiliary signal 124A is shown to be provided to the 3D display 200. Although not shown in Fig. 1, the system 100 may further provide the 2D image signal 122 to the 3D display 200. Alternatively, the 3D display 200 may receive the 2D image signal 122 from elsewhere, e.g., a different system or device.

Although not shown in Fig. 1, the display processor 160 may also refrain from actually adjusting the signal values of the 2D auxiliary signal within the 2D region based on the adjustment value. In this case, the depth processor 160 may provide the adjustment value for use by another depth processor. The other display processor may be comprised in another device such as the 3D display 200. For example, the other display processor may be a view renderer of the 3D display 200. View renderers are known per se from the field of 3D image processing. In addition, the region definer and/or the depth processor 160 may provide the 2D region to the other depth processor. For example, the system 100 may be constituted by a set-top device, and the depth processor 160 of the set-top device may provide the adjustment value to the 3D display 200 which then adjusts the signal values of the 2D auxiliary signal within the 2D region. The adjustment may be effected in the 3D display 200 by altering rendering parameters of the view renderer based on the adjustment value, or by using the adjustment value directly as a rendering parameter. It is noted that in this case, the system 100 may not need to receive the 2D image signal 122. Moreover, the system 100 may not need to receive the 2D auxiliary signal 124 as well and may thus not need to comprise the input 120. In general, it is noted that the depth processor 160 may also constitute a depth processing subsystem 160 which extends over multiple devices, e.g., over a set-top device and a 3D display 200.

Fig. 2 shows a method 300 for processing a three-dimensional [3D] image signal, the 3D image signal comprising a two-dimensional [2D] image signal and a 2D auxiliary signal, the 2D auxiliary signal enabling 3D rendering of the 2D image signal on a 3D display. The method 300 comprises, in a first step, obtaining 310 the 2D image signal and the 2D auxiliary signal. The method 300 further comprises, in a second step, defining 320 a 2D region in the 2D auxiliary signal, the 2D region corresponding to a display region on a display plane of the 3D display when 3D rendering the 2D image signal. The method 300 further comprises, in a third step, obtaining 330 a depth reduction parameter, the depth reduction parameter representing a desired amount of depth reduction in the display region when 3D rendering the 2D image signal. The method 300 further comprises, in a fourth step, deriving 340 an adjustment value from the depth reduction parameter for enabling establishing the depth reduction in the display region by adjusting signal values of the 2D auxiliary signal within the 2D region based on the adjustment value. The method 300 may correspond to an operation of the system 100. However, the method 300 may also be performed in separation of the system 100.

Fig. 3 shows a computer readable medium 350 comprising a computer program product 260 for causing a processor system to perform the method of Fig. 2. For that purpose, the computer program product 360 comprises instructions for the processor system, which, upon execution, cause the processor system to perform the method. The computer program product 360 may be comprised on the computer readable medium 350 as a series of machine readable physical marks and/or as a series of elements having different electrical, e.g., magnetic, or optical properties or values.

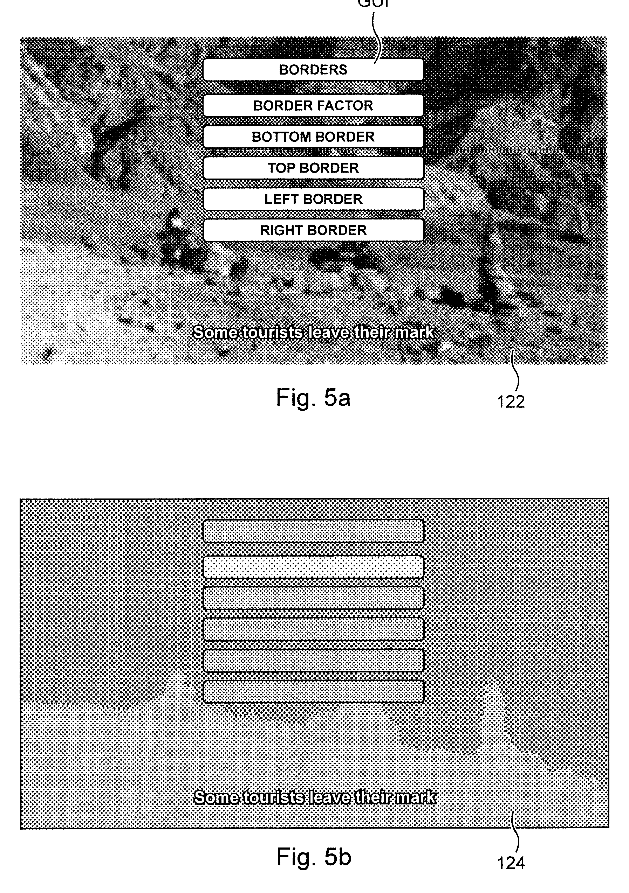

The system 100 may further comprise a user interface subsystem 180 for enabling a user to establish a user-defined 2D region 182. For that purpose, the user interface subsystem 180 may be arranged for establishing a Graphical User interface (GUI) on the 3D display 200 so as to enable the user to establish the user-defined 2D region 182 using the GUI. For example, the GUI may enable the user to define a vertical position on screen below which the depth is reduced. Effectively, the region below the vertical position constitutes the user-defined 2D region 182. The GUI may also enable the user to define a top side, bottom side, left side, and right side of a rectangular user-defined 2D region 182 using, e.g., position sliders corresponding to respective positions of the respective sides. Fig. 5a shows an example of such a GUI. It is noted that various alternatives means for establishing the user-defined 2D region 182 may be advantageously used. For example, the user may select the user-defined 2D region 182 amongst a plurality of pre-determined 2D regions. Moreover, instead of using a GUI, other means may be used, e.g., button presses, voice control, etc.

The region definer 140 may be arranged for defining the 2D region 142 based on the user-defined 2D region 182. For example, the region definer 140 may define the 2D region 142 to be equal to the user-defined 2D region 182. Hence, the user may have full control over the 2D region, and he/she can define the 2D region by establishing the user-defined 2D region 182. Alternatively, the region definer 140 may define the 2D region 142 based on the user-defined 2D region 182 by, e.g., initializing the 2D region with the user-defined 2D region 182, or using the user-defined 2D region 182 in any other suitable manner to define the 2D region 142. Essentially, the 2D region 142 thus constitutes a user configurable depth-reduced area within the 3D image signal.

Alternatively or additionally, the region definer 140 may comprise an overlay detector for detecting an overlay in the 3D image signal 122, 124, and the user interface subsystem 180 may be arranged for enabling the user to establish the user-defined 2D region 182 based on the detected overlay. For example, the user may be shown the detected overlay, i.e., in the form of an outline or position indicators, thereby enabling the user to base his/her establishing of the user-defined 2D region 182 on the detected overlay. The user interface subsystem 180 may also use the detected overlay to initialize the user-defined 2D region 182. Consequently, the detected overlay may provide an initial 2D region, and the user may adjust the initial 2D region so as to establish the user-defined 2D region 182. Alternatively or additionally, the user interface subsystem 180 may establish a grid for providing the user with snap-to-grid functionality when establishing the user-defined 2D region 182. Hence, the user may be guided towards establishing the user-defined 2D region 182.

Alternatively or additionally, the user interface subsystem 180 may be arranged for enabling the user to specify the desired amount of depth reduction in the display region, thereby establishing the depth reduction parameter 162. For example, the user may adjust a depth reduction slider. It is noted that instead of the user establishing the depth reduction parameter 162, the depth reduction parameter 162 may also be pre-set or by determined by the system 100. For example, the depth reduction parameter 162 may depend on an overall amount of depth in the 3D image signal.

The signal input 120 may be arranged for obtaining metadata indicative of a pre-defined 2D region, and the region definer 140 may be arranged for defining the 2D region based on the pre-defined 2D region. The pre-defined 2D region may be provided by earlier or previous system or device in the signal transmission chain. It is noted that the system 100 may, in turn, be arranged for providing the 2D region as defined by the region definer 140 and/or the adjustment value to a later or next system or device in the signal transmission chain, e.g., in the form of further metadata.

The depth processor 160 may be arranged for deriving an offset value from the depth reduction parameter 162 to enable adjusting the signal values of the 2D auxiliary signal 124 within the 2D region by applying said offset value to the signal values. The offset may be a depth-related offset in case the 2D auxiliary signal 124 is a 2D depth-related signal. As such, the offset value may be added and/or subtracted from depth-related signals of the 2D depth-related signal within the 2D region. The offset may also be a disparity offset in case the 2D auxiliary signal 124 is another 2D image signal. The disparity offset may be used to horizontally displace image values of the 2D auxiliary signal 124 in the 2D region. In case the 2D auxiliary signal 124 is a 2D depth-related signal, the depth processor 160 may also be arranged for deriving a gain value from the depth reduction parameter 162 to enable adjusting the depth-related values of the 2D depth-related signal within the 2D region by applying the gain value to the depth-related values. As such, the gain value may be multiplied with depth-related signals of the 2D depth-related signal within the 2D region. The depth processor 160 may be arranged for deriving both a gain value and an offset value from the depth reduction parameter 162. The offset may be first applied, and then the gain, or vice versa.

In case the depth processor 160 is arranged for adjusting the signal values of the 2D auxiliary signal within the 2D region based on the adjustment value, the depth processor 160 may perform said adjusting based on an alpha-blending the signal values with a neutral depth value. The alpha-value in the alpha-blending may be derived from the depth reduction parameter 162. It is noted that alpha-blending is known per se from the field of image processing. Furthermore, the depth processor 160 may be arranged for establishing a gradual transition between the adjusted signal values within the 2D region and non-adjusted signal values outside the 2D region. Hence, a transition region is established surrounding the 2D region in which the gradual transition is effected. Advantageously, a perception of breakup is avoided or reduced which would otherwise occur if an object extends both into the 2D region as well as outside of said region. The gradual transition may be a substantially first-order linear transition or second-order non-linear transition.

Although not shown in Fig. 1, the system 100 may further comprise an image processor 180 for i) establishing a 2D image region in the 2D image signal 122 which corresponds to the 2D region in the 2D auxiliary signal 124, and ii) applying an image enhancement technique to image values of the 2D image signal within the 2D image region. The image enhancement technique may be one or more of: a contrast enhancement, a sharpness adjustment, and a temporal filtering. Advantageously, a readability of the overlay, especially a text-based overlay, is further improved.

It is noted that the term image signal refers to a signal representing at least one image. The image signal may also represent multiple images, e.g., a sequence of images such as a video sequence. Effectively, each image signal may thus constitute a video signal.

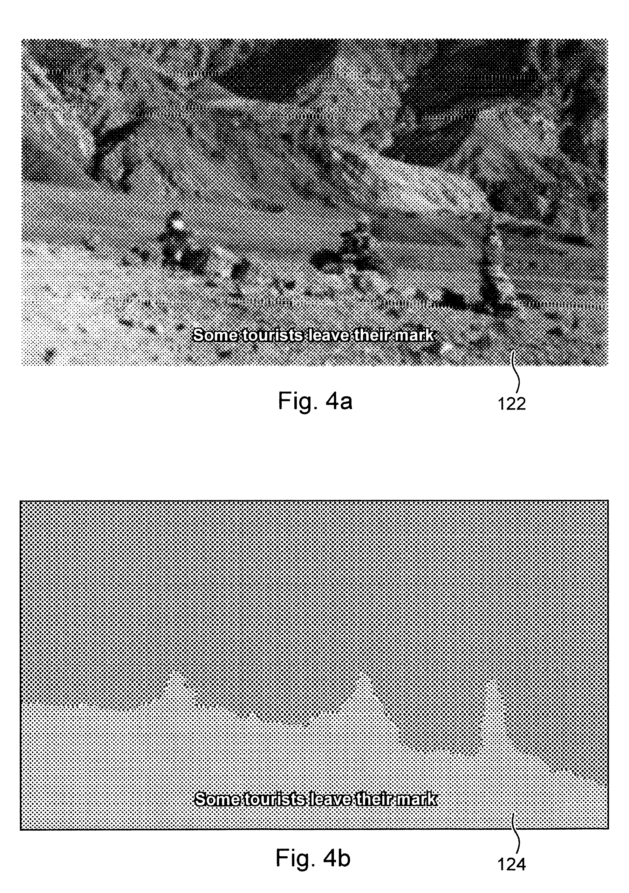

The operation of the system 100 and the method 300 may be further explained in reference to Fig. 4a onward. Fig. 4a shows a 2D image signal 122 comprising subtitles of the text "Some tourists leave their mark". The subtitles constitute a hardcoded overlay, i.e., are part of the 2D image signal 122. Fig. 4b shows a 2D depth signal 124 corresponding to the 2D image signal. Here, an intensity is inversely proportionate to a distance to the viewer, i.e., a higher intensity corresponds to being closer to the viewer, and a lower intensity corresponds to being further away from the viewer. In this example, a lower intensity, i.e., darker, corresponds to a depth behind the display plane and a higher intensity, i.e., brighter, corresponds to a depth in front of the display plane.

Fig. 5a shows an example of the user interface subsystem 180 establishing a GUI on screen for enabling the user to establish a user-defined 2D region. The GUI comprises a slider termed "Border factor" which enables the user to specify the desired amount of depth reduction in the display region. The GUI further comprises four sliders enabling the user to establish multiple user-defined 2D regions, i.e., one at every side of the 2D image signal 122. If all four user-defined 2D regions are established by the user with a non-zero size, said regions together have a shape of a window frame and thus effectively constitute a single user-defined 2D region. It is noted that many alternatives are conceivable for enabling the user to establish the user-defined 2D region(s). By operating the sliders suitable, the user can thus establish the user-defined 2D region. Fig. 5b shows the 2D depth signal reflecting the GUI, i.e., showing that the GUI is also established at a depth.

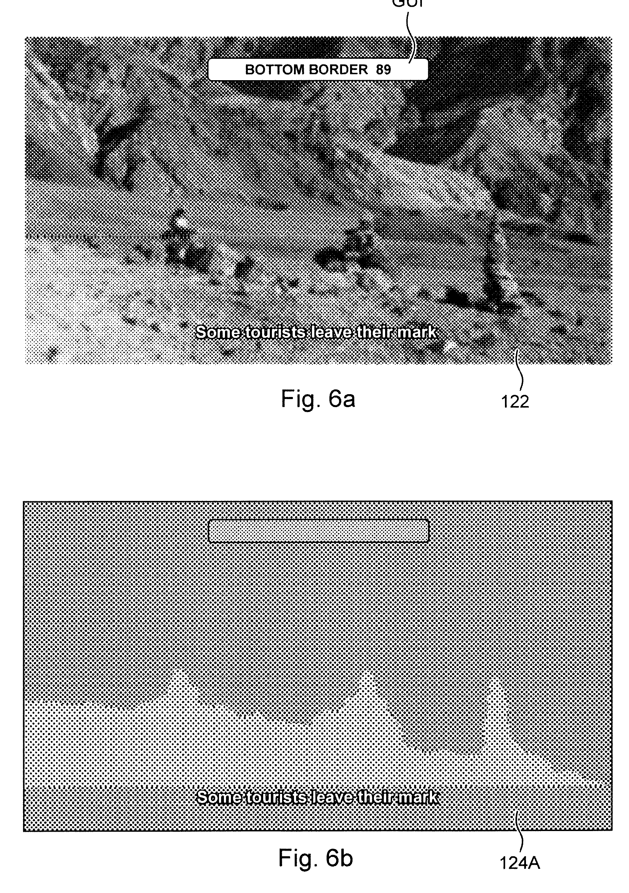

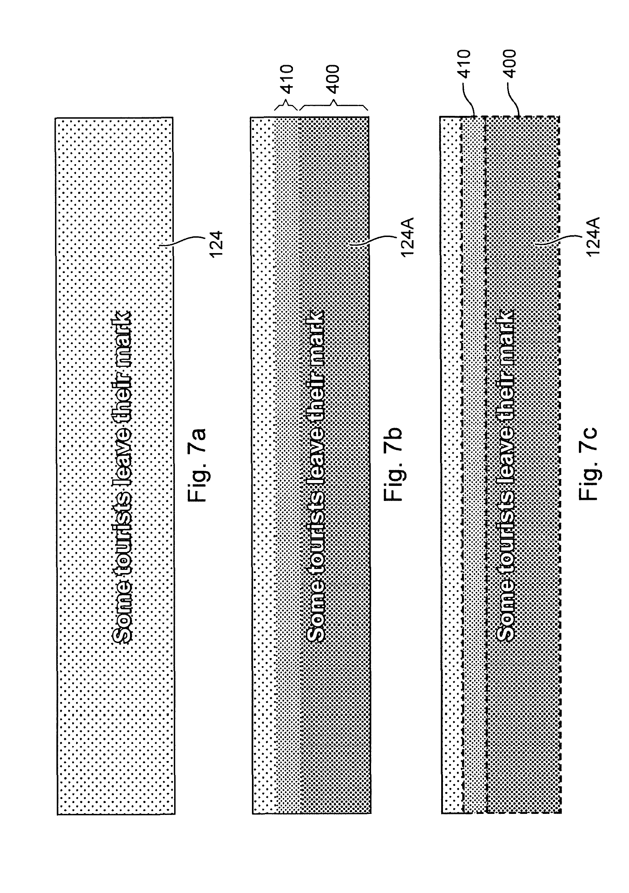

Fig. 6a shows the user completing the adjustments of the slider by establishing a user-defined 2D region at the bottom of the screen, i.e., comprising in this particular example all 89 image lines from the bottom of the 2D image signal 122. Fig. 6b shows a result of the region definer 140 establishing the user-defined 2D region as the 2D region, and the depth processor 160 establishing the depth reduction in the display region. It can be seen that depth values of the 2D depth signal within the 2D region are adjusted, thereby providing the subtitles with a depth that results the subtitles having a larger distance to the viewer, i.e., having a reduced depth. Fig. 7a shows a close-up view of the 2D depth signal 122 without depth reduction. Fig. 7b shows a close-up view of the 2D depth signal with depth reduction, i.e., the adjusted 2D depth signal 124. The extent of the 2D region 400 is indicated here. Moreover, a transition region 410 can be seen. Here, a result is shown of the depth processor 160 establishing a gradual transition between the adjusted signal values within the 2D region 400 and non-adjusted signal values outside the 2D region, yielding said transition region 410. Fig. 7c illustrates the display region and a transition region using dashed rectangles.

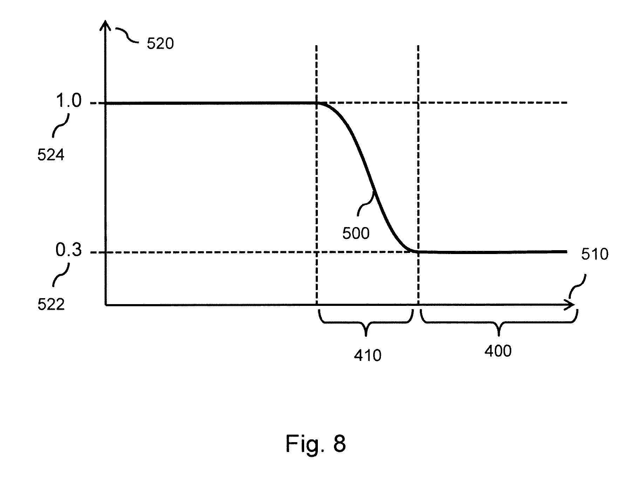

The adjusted 2D depth signal 124a of Figs. 6b, 7b and 7c may be obtained by applying a gain value to the 2D depth signal 122 which varies as a function of vertical position. Fig 8 shows an example of such a varying gain value. Here, a graph is shown representing along its horizontal axis 510 a vertical position, i.e., y-position, on the display and along its vertical axis 520 a gain value. The graph shows a gradual varying of the gain value as function of the y-position, i.e., a gain value function 500 which varies from a first gain value 524 of, e.g., 0.3 within the 2D region 400 to a second gain value 524 of 1.0 outside of the 2D region, with the gain value slowly transitioning from 0.3 to 1.0 in the transition region 410. The gain value may be applied by first subtracting an offset from the 2D depth signal 122. The offset may correspond to a neutral depth value, e.g., one that corresponds to a neutral display depth. After applying the gain value, the offset may again be added to the 2D depth signal 122. All of the depth values of the 2D depth signal 122 may be multiplied by the gain value. Alternatively, only the depth values in the 2D region 400 and the transition region 410 may be multiplied with the gain value. It is noted that another term for gain value is gain factor.

It will be appreciated that, in accordance with the present invention, a system may be provided for processing a 3D image signal, the 3D image signal comprising a two-dimensional 2D image signal and a 2D auxiliary signal, the 2D auxiliary signal enabling 3D rendering of the 2D image signal on a 3D display, the system comprising:
- a signal input for obtaining the 2D image signal and the 2D auxiliary signal;
- a region definer for defining a 2D region in the 2D auxiliary signal, the 2D region corresponding to a display region on a display plane of the 3D display when 3D rendering the 2D image signal;
- a depth processor for i) obtaining a depth reduction parameter, the depth reduction parameter representing a desired amount of depth reduction in the display region when 3D rendering the 2D image signal, and ii) deriving an adjustment value from the depth reduction parameter for enabling establishing the depth reduction in the display region by adjusting signal values of the 2D auxiliary signal within the 2D region based on the adjustment value.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for processing a three-dimensional [3D] image signal, the 3D image signal comprising a two-dimensional [2D] image signal and a 2D auxiliary signal, the 2D auxiliary signal being a 2D depth-related signal for enabling 3D rendering of the 2D image signal on a 3D display (200), the system comprising:
- a signal input (120) for obtaining the 2D image signal (122) and the 2D auxiliary signal (122);
- a user interface subsystem (180) for enabling a user to establish a user-defined 2D region (182) in the 2D image signal, the user-defined 2D region comprising an overlay;
- a region definer (140) for, based on the user-defined 2D region, defining a 2D auxiliary region (142) in the 2D auxiliary signal, the 2D auxiliary region corresponding to a display region on a display plane of the 3D display when 3D rendering the 2D image signal using the 2D auxiliary signal; and
- a depth processor (160) for:
i) obtaining a depth reduction parameter (162), the depth reduction parameter representing a desired amount of depth reduction in the display region towards a neutral display depth when 3D rendering the 2D image signal on the 3D display, and
ii) deriving a gain value from the depth reduction parameter for enabling establishing the depth reduction in the display region towards the neutral display depth by
iii) subtracting an offset corresponding to the neutral display depth from signal values of the 2D auxiliary signal within the 2D auxiliary region, applying the gain value as a multiplication factor, and re-adding the offset.

2. The system (100) according to claim 1, wherein:
- the region definer (140) comprises an overlay detector for detecting the overlay in the 3D image signal (122, 124); and
- the user interface subsystem (180) is arranged for enabling the user to establish the user-defined 2D region (182) based on the detected overlay.

3. The system (100) according to claim 2, wherein the user interface subsystem (180) is arranged for using the detected overlay to:
- initialize the user-defined 2D region; and/or
- establish a grid for providing the user with snap-to-grid functionality when establishing the user-defined 2D region.

4. The system (100) according to any one of claims 1-3, wherein the user interface subsystem (180) is arranged for enabling the user to specify the desired amount of depth reduction in the display region, thereby establishing the depth reduction parameter (162).

5. The system (100) according to claim 1, wherein the signal input (120) is arranged for obtaining metadata indicative of a pre-defined 2D region, and wherein the region definer (140) is arranged for defining the 2D region further based on the pre-defined 2D region.

6. The system (100) according to claim 1, wherein the depth processor (160) is arranged for establishing a gradual transition between the adjusted signal values within the 2D auxiliary region and non-adjusted signal values outside the 2D auxiliary region.

7. The system (100) according to claim 6, wherein the gradual transition is a substantially first-order linear transition or second-order non-linear transition.

8. 3D display device comprising the system according to any one of the above claims.

9. Method (300) for processing a three-dimensional [3D] image signal, the 3D image signal comprising a two-dimensional [2D] image signal and a 2D auxiliary signal, the 2D auxiliary signal being a 2D depth-related signal for enabling 3D rendering of the 2D image signal on a 3D display, the method comprising:
- obtaining (310) the 2D image signal and the 2D auxiliary signal;
- enabling a user to establish a user-defined 2D region in the 2D image signal, the user-defined 2D region comprising an overlay;
- based on the user-defined 2D region, defining (320) a 2D auxiliary region in the 20 auxiliary signal, the 2D auxiliary region corresponding to a display region on a display plane of the 3D display when 3D rendering the 2D image signal using the 2D auxiliary signal;
- obtaining (330) a depth reduction parameter, the depth reduction parameter representing a desired amount of depth reduction in the display region towards a neutral display depth when 3D rendering the 2D image signal on the 3D display; and
- deriving (340) a gain value from the depth reduction parameter for enabling establishing the depth reduction in the display region towards the neutral display depth by
- subtracting an offset corresponding to the neutral display depth from signal values of the 2D auxiliary signal within the 2D region, applying the gain value as a multiplication factor, and re-adding the offset.

10. Computer program product (360) comprising instructions for causing a processor system to perform the method (300) according to claim 9.

## Patentansprüche

1. Ein System (100) zum Verarbeiten eines dreidimensionalen [3D] Bildsignals, wobei das 3D Bildsignal ein zweidimensionales [2D] Bildsignal und ein 2D Hilfssignal umfasst, wobei das 2D Hilfssignal ein tiefenbezogenes 2D Signal zum Ermöglichen einer 3D Wiedergabe des 2D Bildsignals auf einem 3D Bildschirm (200) ist, wobei das System folgendes umfasst:
- einen Signaleingang (120) zum Erhalten des 2D Bildsignals (122) und des 2D Hilfssignals (122);
- ein Benutzeroberflächen-Subsystem (180), um es einem Benutzer zu ermöglichen, einen benutzerdefinierten 2D Bereich (182) im 2D Bildsignal zu erstellen, wobei der benutzerdefinierte 2D Bereich eine Überlagerung umfasst;
- einen Bereichsdefinierer (140) zum Definieren, basierend auf dem benutzerdefinierten 2D Bereich, eines 2D Hilfsbereichs (142) im 2D Hilfssignal, wobei der 2D Hilfsbereich einem Bildschirmbereich auf einer Bildschirmebene des 3D Bildschirms entspricht während der 3D Wiedergabe des 2D Bildsignals unter Verwendung des 2D Hilfssignals; und
einen Tiefenprozessor (160) zum:
i) Erhalt eines Tiefenreduktionsparameters (162), wobei der Tiefenreduktionsparameter einen gewünschten Umfang an Tiefenreduktion im Bildschirmbereich zu einer neutralen Bildschirmtiefe darstellt während der 3D Wiedergabe des 2D Bildsignals auf dem 3D Bildschirm, und
ii) Ableiten eines Verstärkungswerts vom Tiefenreduktionsparameter, zur Ermöglichung der Erstellung der Tiefenreduktion im Bildschirmbereich zur neutralen Bildschirmtiefe durch
iii) Abziehen eines Offsets der neutralen Bildschirmtiefe entsprechend von den Signalwerten des 2D Hilfssignals innerhalb des 2D Hilfsbereichs, unter Anwendung des Verstärkungswerts als Multiplikationsfaktor, und das erneute Hinzuzählen des Offsets.

2. Das System (100) nach Anspruch 1, wobei:
- der Bereichsdefinierer (140) einen Überlagerungsdetektor zum Erfassen der Überlagerung im 3D Bildsignal (122, 124) umfasst; und
- das Benutzeroberflächen-Subsystem (180) angeordnet ist, um es dem Benutzer zu ermöglichen, den benutzerdefinierten 2D Bereich (182) basierend auf der erfassten Überlagerung zu erstellen.

3. Das System (100) nach Anspruch 2, wobei das Benutzeroberflächen-Subsystem (180) angeordnet ist, um die erfasste Überlagerung zu verwenden, um:
- den benutzerdefinierten 2D Bereich zu initialisieren; und/oder
- einen Raster zur Bereitstellung einer Rasterschnappfunktion für den Benutzer bei der Erstellung des benutzerdefinierten 2D Bereichs zu erstellen.

4. Das System (100) nach irgendeinem der Ansprüche 1 bis 3, wobei das Benutzeroberflächen-Subsystem (180) angeordnet ist, um es dem Benutzer zu ermöglichen, den gewünschten Umfang der Tiefenreduktion im Bildschirmbereich festzulegen, und damit die Erstellung des Tiefenreduktionsparameters (162).

5. Das System (100) nach Anspruch 1, wobei der Signaleingang (120) angeordnet ist, um Metadaten als Hinweis für einen vorbestimmten 2D Bereich zu erhalten, und wobei der Bereichsdefinierer (140) angeordnet ist, um den 2D Bereich darüber hinaus basierend auf einem vorbestimmten 2D Bereich zu definieren.

6. Das System (100) nach Anspruch 1, wobei der Tiefenprozessor (160) angeordnet ist, um einen graduellen Übergang zwischen den angepassten Signalwerten innerhalb des 2D Hilfsbereichs und nicht angepassten Signalwerten außerhalb des 2D Hilfsbereichs zu erstellen.

7. Das System (100) nach Anspruch 6, wobei der graduelle Übergang im Wesentlichen ein linearer Übergang erster Ordnung oder ein nicht linearer Übergang zweiter Ordnung ist.

8. Ein 3D Bildschirm, das System nach irgendeinem der vorherigen Ansprüche umfassend.

9. Ein Verfahren (300) zum Verarbeiten eines dreidimensionalen [3D] Bildsignals, wobei das 3D Bildsignal ein zweidimensionales [2D] Bildsignal und ein 2D Hilfssignal umfasst, wobei das 2D Hilfssignal ein tiefenbezogenes 2D Signal zum Ermöglichen einer 3D Wiedergabe des 2D Bildsignals auf einem 3D Bildschirm (200) ist, wobei das Verfahren folgendes umfasst:
- Erhalt (310) des 2D Bildsignals und des 2D Hilfssignals;
- die Ermöglichung für einen Benutzer, einen benutzerdefinierten 2D Bereich im 2D Bildsignal zu erstellen, wobei der benutzerdefinierte 2D Bereich eine Überlagerung umfasst;
- basierend auf dem benutzerdefinierten 2D Bereich, das Definieren (320) eines 2D Hilfsbereichs im 2D Hilfssignal, wobei der 2D Hilfsbereich einem Bildschirmbereich auf einer Bildschirmebene des 3D Bildschirms entspricht während der 3D Wiedergabe des 2D Bildsignals unter Verwendung des 2D Hilfssignals;
- Erhalt (330) eines Tiefenreduktionsparameters, wobei der Tiefenreduktionsparameter einen gewünschten Umfang an Tiefenreduktion im Bildschirmbereich zu einer neutralen Bildschirmtiefe darstellt während der 3D Wiedergabe des 2D Bildsignals auf dem 3D Bildschirm, und
- Ableiten (340) eines Verstärkungswerts vom Tiefenreduktionsparameter, zur Ermöglichung der Erstellung der Tiefenreduktion im Bildschirmbereich zur neutralen Bildschirmtiefe durch
- Abziehen eines Offsets der neutralen Bildschirmtiefe entsprechend von den Signalwerten des 2D Hilfssignals innerhalb des 2D Hilfsbereichs, unter Anwendung des Verstärkungswerts als Multiplikationsfaktor, und das erneute Hinzuzählen des Offsets.

10. Ein Computerprogrammprodukt (360), Befehle umfassend, um ein Prozessorsystem dazu zu bringen, das Verfahren (300) nach Anspruch 9 auszuführen.

## Revendications

1. Un système (100) de traitement d'un signal d'image tridimensionnel [3D], le signal d'image 3D comprenant un signal d'image bidimensionnel [2D] et un signal auxiliaire 2D, le signal auxiliaire 2D étant un signal lié à la profondeur 2D pour permettre un rendu 3D du signal d'image 2D sur un écran 3D (200), le système comprenant :
- une entrée de signal (120) pour obtenir le signal d'image 2D (122) et le signal auxiliaire 2D (122) ;
- un sous-système d'interface utilisateur (180) pour permettre à un utilisateur d'établir une région 2D définie par l'utilisateur (182) dans le signal d'image 2D, la région 2D définie par l'utilisateur comprenant une superposition ;
- un définisseur de région (140), basé sur la région 2D définie par l'utilisateur, pour définir une région auxiliaire 2D (142) dans le signal auxiliaire 2D, la région auxiliaire 2D correspondant à une région d'affichage sur un plan d'affichage de l'écran 3D lors du rendu 3D du signal d'image 2D en utilisant le signal auxiliaire 2D ; et
- un processeur de profondeur (160) pour :
i) l'obtention d'un paramètre de réduction de profondeur (162), le paramètre de réduction de profondeur représentant une quantité souhaitée de réduction de profondeur dans la région d'affichage vers une profondeur d'affichage neutre lors du rendu 3D du signal d'image 2D sur l'écran 3D, et
ii) la dérivation d'une valeur de gain du paramètre de réduction de profondeur pour permettre l'établissement de la réduction de profondeur dans la région d'affichage vers la profondeur d'affichage neutre par
iii) la soustraction d'un décalage correspondant à la profondeur d'affichage neutre de valeurs de signal du signal auxiliaire 2D à l'intérieur de la région auxiliaire 2D, l'application de la valeur de gain comme un facteur de multiplication et le rajout du décalage.

2. Le système (100) selon la revendication 1, dans lequel :
- le définisseur de région (140) comprend un détecteur de superposition pour détecter la superposition dans le signal d'image 3D (122, 124) ; et
- le sous-système d'interface utilisateur (180) est agencé pour permettre à l'utilisateur d'établir la région 2D définie par l'utilisateur (182) sur la base de la superposition détectée.

3. Le système (100) selon la revendication 2, dans lequel le sous-système d'interface utilisateur (180) est agencé pour l'utilisation de la superposition détectée pour :
- initialiser la région 2D définie par l'utilisateur ; et/ou
- établir une grille pour fournir à l'utilisateur la fonctionnalité aligner sur la grille lors de l'établissement de la région 2D définie par l'utilisateur.

4. Le système (100) selon l'une quelconque des revendications 1-3, dans lequel le sous-système d'interface utilisateur (180) est agencé pour permettre à l'utilisateur de spécifier la quantité souhaitée de réduction de profondeur dans la région d'affichage, établissant ainsi le paramètre de réduction de profondeur (162).

5. Le système (100) selon la revendication 1, dans lequel l'entrée de signal (120) est agencée pour obtenir des métadonnées indiquant une région 2D prédéfinie, et dans lequel le définisseur de région (140) est agencé pour définir la région 2D basée en outre sur la région 2D prédéfinie.

6. Le système (100) selon la revendication 1, dans lequel le processeur de profondeur (160) est agencé pour établir une transition graduelle entre les valeurs de signal ajustées à l'intérieur de la région auxiliaire 2D et des valeurs de signal non ajustées à l'extérieur de la région 2D.

7. Le système (100) selon la revendication 6, dans lequel la transition graduelle est une transition linéaire substantiellement de premier ordre ou une transition non linéaire de deuxième ordre.

8. Un dispositif d'affichage 3D comprenant le système selon l'une quelconque des revendications ci-dessus.

9. Un procédé (300) de traitement d'un signal d'image tridimensionnel [3D], le signal d'image 3D comprenant un signal d'image bidimensionnel [2D] et un signal auxiliaire 2D, le signal auxiliaire 2D étant un signal lié à la profondeur 2D pour permettre un rendu 3D du signal d'image 2D sur un écran 3D, le procédé comprenant :
- l'obtention (310) du signal d'image 2D et du signal auxiliaire 2D ;
- la possibilité pour un utilisateur d'établir une région 2D définie par l'utilisateur dans le signal d'image 2D, la région 2D définie par l'utilisateur comprenant une superposition ;
- basée sur la région 2D définie par l'utilisateur, la définition (320) d'une région auxiliaire 2D dans le signal auxiliaire 2D, la région auxiliaire 2D correspondant à une région d'affichage sur un plan d'affichage de l'écran 3D lors du rendu 3D du signal d'image 2D en utilisant le signal auxiliaire 2D ;
- l'obtention (330) d'un paramètre de réduction de profondeur, le paramètre de réduction de profondeur représentant une quantité souhaitée de réduction de profondeur dans la région d'affichage vers une profondeur d'affichage neutre lors du rendu 3D du signal d'image 2D sur l'écran 3D ; et
- la dérivation (340) d'une valeur de gain du paramètre de réduction de profondeur pour permettre l'établissement de la réduction de profondeur dans la région d'affichage vers la profondeur d'affichage neutre par
- la soustraction d'un décalage correspondant à la profondeur d'affichage neutre de valeurs de signal du signal auxiliaire 2D à l'intérieur de la région 2D, l'application de la valeur de gain comme un facteur de multiplication et le rajout du décalage.

10. Un produit de programme informatique (360) comprenant des instructions pour amener un système de traitement à réaliser le procédé (300) selon la revendication 9.
